# EUROPÄISCHE PATENTANMELDUNG

(11) **EP 2 429 182 A2**
(43) Veröffentlichungstag der Anmeldung: **14.03.2012**
(21) Anmeldenummer: 11180889.5
(22) Anmeldetag: 12.09.2011
(51) Int. Cl.: H04N 5/272, H04N 5/77, H04N 21/2187, H04N 21/235

(54) **Verfahren zur Unkenntlichmachung personenbezogener Daten einer Kamera**

(30) Priorität: 13.09.2010 AT 15102010
(71) Anmelder: Smartspector Artificial Perception Engineering GmbH, 1050 Wien (AT)
(72) Erfinder: Schmidradler, DI Dr Dieter, 1050 Wien (AT)
(74) Vertreter: Patentanwaltskanzlei Matschnig & Forsthuber OG

(57) **Zusammenfassung**

Die Erfindung betrifft ein Verfahren zur Unkenntlichmachung personenbezogener Daten einer Kamera 1, welche mittels einer Verarbeitungseinheit 15 personenbezogene Daten in vom Bildsensor 2 der Kamera 1 erfassten Originalbildern 3 in jeder durch einen Benutzer 6 einstellbaren Konfiguration 20 innerhalb der Kamera unkenntlich macht, und nur auf diese Weise veränderte Bilder oder aus diesen abgeleitete Bilder als Ergebnisbilder 13 in einem für den Benutzer zugänglichen Speicher 18 ablegt oder über eine für den Benutzer zugängliche Schnittstelle 17 ausgibt.

## Beschreibung

Die vorliegende Erfindung betrifft ein Verfahren zur Unkenntlichmachung personenbezogener Daten einer Kamera und bezieht sich auf die Aufgabe, bei der Erfassung, Verarbeitung und Weitergabe von Bilddaten die Sichtbarkeit von personenbezogenen Daten einzuschränken bzw. zu unterbinden.

Das Unkenntlichmachen personenbezogener Daten in den Bildern einer Kamera erfolgt erfindungsgemäß entweder in Form einer Anonymisierung, d.h. die personenbezogenen Daten werden in Bildern so verändert, dass die Daten keiner Person mehr zugeordnet werden, oder aber in Form einer Pseudonymisierung, bei der personenbezogene Daten im Bild so verschlüsselt werden, dass diese im verschlüsselten Bild subjektiv nicht erkennbar sind, aber von einem befugten Benutzer bei Bedarf wieder hergestellt werden können.

Nach heutigem Stand der Technik ist eine Kamera typisch ein fototechnisches Gerät, das statische oder bewegte Bilder mittels eines elektronischen Bildsensors erfasst, über eine integrierte elektronische Schaltung aufbereitet und das Ergebnis dieser Aufbereitung über zumindest eine, heute üblicherweise digitale Schnittstelle bereitstellt. Kameras, welche Bilder mittels eines fotografischen Films erfassen, wurden in den vergangenen Jahren zunehmend von Kameras mit elektronischem Bildsensor verdrängt, sie sind nicht Gegenstand der Erfindung und bleiben in den weiteren Ausführungen unberücksichtigt.

Konventionelle Kameras sind lediglich in der Lage, Sensordaten des Bildsensors mittels geeigneter Analog- und/oder (in weiterer Folge wird "oder" in diesem Sinne als "nicht exklusives oder" verwendet, sofern aus dem Zusammenhang nicht ausdrücklich eine Ausschließlichkeit hervorgeht) Digitalschaltungen aufgrund voreingestellter Betriebsparameter in ein mit einem Empfänger kompatibles Signal bzw. Datenformat umzuwandeln und über eine oder mehrere Schnittstellen auszugeben.

Innerhalb einer Kamera werden demnach vom Bildsensor ausgegebene Signale bzw. Daten zunächst aufbereitet. Dies kann erfolgen z.B. mittels analoger Signalverstärkung und Digitalisierung, sowie mittels weiterer linearer oder nichtlinearer Transformationen, z.B. zur Gamma-Korrektur, zur Schwarzpegel-Korrektur, zum Weißabgleich oder zur Farbinterpolation bei Farbbildsensoren z.B. mit Bayer-Sensor, vgl. Patent US3971065. Im weiteren Text wird der Begriff "Originalbild" synonym gebraucht für jenes Bild, das solcherart aufbereitetet einer nachgelagerten Funktionseinheit in oder außerhalb der Kamera in digitaler, veränderbarer Form zur Verfügung gestellt wird.

Im Sinne weiterer Betrachtungen wird der Begriff "Kamera" synonym mit modernen Kameras verwendet, die mittels einer integrierten digitalen Verarbeitungseinheit die Möglichkeit bieten, Inhalte von Bildern zu analysieren. Viele handelsübliche Fotoapparate und Videokameras für den Verbrauchermarkt fallen ebenso in diese Kategorie, wie auch diverse HW-und SW-Komponenten in multifunktionalen Geräten (Mobiltelefone, Notebooks, Spielekonsolen etc.) und sogenannte "Smart-Kameras". Während bei den erstgenannten Typen die Hauptfunktion nach wie vor in der Bilderfassung liegt, dienen z.B. Smart-Kameras und Kameras für Spielekonsolen vorwiegend dazu, aus erfassten Bildern bildhafte oder abstrakte Ergebnisse bzw. Steuersignale, in weiterer Folge kurz "Messergebnisse" zu erzeugen.

Der im Text verwendete Begriff "Kamerasystem" wird in einem übergeordneten Sinne verwendet, er umfasst jeweils eine oder mehrere Kameras sowie technische Einrichtungen für deren Betrieb, deren Konfiguration sowie für die applikationsspezifische Übertragung und Aggregration von Bildern oder Messergebnissen.

Kameras werden in verschiedensten Anwendungsfeldern eingesetzt, wie beispielsweise in der Sicherheitstechnik, im Verkehrsmanagement, in der automatisationsunterstützten Aufmerksamkeitsanalyse, sowie auch im Bereich "Ambient Assisted Living".

Die Wahrung der Privatsphäre steht bei solchen Anwendungen oftmals dem Bedürfnis nach Sicherheit, also der Abwendung oder der Nachvollziehbarkeit von Gefahrensituationen, sowie der Ahndung von gesetzlichen Übertretungen oder der Aufklärung krimineller Handlungen gegenüber.

In vielen Fällen, z.B. bei einer visuellen statistischen Analyse des Verkehrsgeschehens oder für statistische Aufmerksamkeitsanalysen, ist die Erhebung personenbezogener Daten nicht Teil des relevanten Messergebnisses. Messprinzipbedingt geht bei solchen Systemen jedoch oftmals die Erfassung, Speicherung und Einsehbarkeit von personenbezogenen Daten einher, womit bei der Genehmigung und Auslegung derartiger Anwendungen die geltenden Regelungen des Datenschutzes zu beachten sind.

Personenbezogene Daten in von Kameras erfassten Bildern oder Bildsequenzen sind vor allem wiedererkennbare Gesichter und lesbare Kraftfahrzeugkennzeichen (in weiterer Folge kurz "Kfz-Kennzeichen").

Um die Erfassung solcher personenbezogener Daten zuverlässig zu unterbinden, werden Kameras im öffentlichen Raum vielfach so ausgelegt, dass die Bildauflösung im Beobachtungsbereich so niedrig oder die Bildschunschärfe im relevanten Entfernungsbereich so hoch ist, dass personenbezogene Daten im Bild nicht erkennbar sind. Auf diese Weise ausgelegte Systeme verfügen naturgemäß über keine technische Möglichkeit, statistische oder anonymisierte Aussagen aus den genannten, personenbezogenen Daten abzuleiten, da diese bereits aufgrund der Auslegung der Sensorik unwiederbringlich verloren sind.

Bei Kamerasystemen im Bereich der Sicherheitstechnik besteht im Gegensatz dazu das ausdrückliche Ziel vielfach darin, geeignete personenbezogene Identifikationsmerkmale in hoher Qualität zu erfassen, um Gesetzesübertretungen oder kriminellen Handlungen vorzubeugen oder diese nachzuvollziehen.

Im alltäglichen Einsatz erfassen solche Systeme jedoch vielfach auch persönlich zuordenbare Daten von Menschen, die per se keinerlei Anlass zur Identitätsfeststellung geben. Da ein definierter Kreis von Benutzern aufgrund entsprechender Zugangsberechtigungen bei so ausgelegten Systemen in Echtzeit übertragenes oder auch gespeichertes Bildmaterial einsehen kann, kann einer missbräuchlichen Beeinträchtigung der Privatsphähre nach dem heutigen Stand der Technik oft nur unzureichend begegnet werden. Abseits des Eintretens besonderer Ereignisse stellt das System somit für alle Menschen einen gewissen, im Ausmaß für den Einzelnen nicht unmittelbar beurteilbaren Eingriff in seine persönliche Sphäre dar.

Ein ähnliches Problem besteht unter anderem auch bei verkehrstechnischen Anwendungen, z.B. bei der Kontrolle der Durchschnittsgeschwindigkeit innerhalb eines definierten Streckenabschnitts. Dabei werden von Kraftfahrzeugen die Passagezeitpunkte sowie beweismitteltaugliche Bilder an zwei Kontrollpunkten erfasst. Nach Passage des ersten Kontrollpunktes müssen nach dem vorliegenden Stand der Technik die datenschutzrechtlich relevanten Bilder aller Verkehrsteilnehmer erfasst und zwischengespeichert werden, da anhand der erlaubten Höchstgeschwindigkeit erst nach Ablauf einer vorgeschriebenen Mindestzeit sicher kein Übertretungsfall vorliegt.

Dem heutigen Stand der Technik entsprechende Kamerasysteme bieten zwar auch die Möglichkeit, Bilddaten im Regelbetrieb bereits in der Kamera oder in einem frühen der Bildübermittlung nachgelagerten Prozessschritt zu anonymisieren oder zu pseudonymisieren, allerdings bieten auch mit solchen Schutzmechanismen ausgestattete Kamerasysteme bei entsprechender Parametereinstellung durch einen geschulten und entsprechend autorisierten Benutzer die Möglichkeit, personenbezogene Bilder der Kameras zumindest während des Einstellvorganges, bei Service- und Diagnose oder aufgrund unzureichender Sicherheitsvorkehrungen einzusehen, und damit auch zu speichern und weiterzuverarbeiten. Somit verfügen zumindest mit dem System betraute Personen über die technische Möglichkeit, zu personenbezogenen Daten zu gelangen. Diese Einsehbarkeit von Daten durch technisches Personal steht teilweise auch in Konflikt mit gesetzlichen Vorgaben oder mit den Interessen des ausschließlichen Zugangs für tatsächlich befugte Personengruppen, z.B. der Exekutive.

Entsprechend den bisherigen Ausführungen besteht das Ziel der vorliegenden Erfindung darin, erfasste Bilder bereits innerhalb einer Kamera in einer Weise zu verändern, dass ein Missbrauch personenbezogener Daten möglichst zuverlässig unterbunden werden kann.

Die Erfindung löst die gestellte Aufgabe erfindungsgemäß dadurch, dass eine Verarbeitungseinheit personenbezogene Daten in vom Bildsensor der Kamera erfassten Originalbildern in jeder durch einen Benutzer einstellbaren Konfiguration innerhalb der Kamera unkenntlich macht, und nur auf diese Weise veränderte Bilder oder aus diesen abgeleitete Bilder als Ergebnisbilder in einem für den Benutzer zugänglichen Speicher ablegt oder über eine für den Benutzer zugängliche Schnittstelle ausgibt.

Weitere Merkmale der Erfindung finden sich in den Unteransprüchen.

Ein Benutzer ist im Sinne des vorliegenden Dokuments als natürliche Person zu verstehen, die ein Kamerasystem nutzt und über eine Autorisierung verfügt, Messungen mit dem Kamerasystem vorzunehmen oder bestimmte Messergebnisse des Kamerasystems auszuwerten oder Änderungen am Kamerasystem vorzunehmen. Die beschriebenen Sicherheitsmechanismen, die für "einen" Benutzer definiert werden, beziehen sich nicht zwangsläufig auf jeden Benutzer. Ob die erfindungsgemäße Unkenntlichmachung sich auf jeden beliebigen Benutzer, oder aber nur auf eine bestimmte Gruppe von Benutzern ("Benutzergruppe") bezieht, hängt vom Anwendungsfall ab und wird anhand verschiedener Realisierungsbeispiele jeweils näher beschrieben. Demgegenüber ist der Hersteller im Sinne dieses Dokuments als natürliche oder juristische Person zu sehen, die eine Kamera oder ein Kamerasystem für einen bestimmten Einsatzzweck herstellt oder konfiguriert.

Eine ausführlichere und klarere Beschreibung der Erfindung sowie deren technische Vorteile wird aus der nachfolgenden, detaillierten Beschreibung hervorgehen, dies vor allem im Zusammenhang mit den zugehörigen Bildern.

Im Folgenden wird die Erfindung anhand eines nicht einschränkenden Ausführungsbeispiels, das in der Zeichnung dargestellt ist, näher erläutert. In dieser zeigt schematisch:
Figur 1 die Erfassung personenbezogener Daten anhand zweier Bildbeispiele;
Figur 2 ein Anwendungsbeispiel zu Figur 1,
Figur 3 Maßnahmen zur prozessbegleitenden bzw. nachträglichen Anonymisierung personenbezogener Daten,
Figur 4 ein Realisierungsbeispiel für ein erfindungsgemäßes Kamerasystem,
Figur 5 im Vergleich zu Figur 2 eine Realisierung unter Verwendung der erfindungsgemäßen Kamera,
Figur 6 ein Realisierungbeispiel zur erfindungsgemäßen Pseudonymisierung personenbezogener Daten zur Vermeidung einer missbräuchlichen Verwendung der Daten durch unbefugte Nutzergruppen, und
Figur 7 eine Realisierungsvariante der Erfindung am Beispiel einer anonymisierten Reisezeitermittlung in Verbindung mit pseudonymisierten Bilddaten für eine bedingte Erhebung personenbezogener Daten für den Fall einer Geschwindigkeitsübertretung.

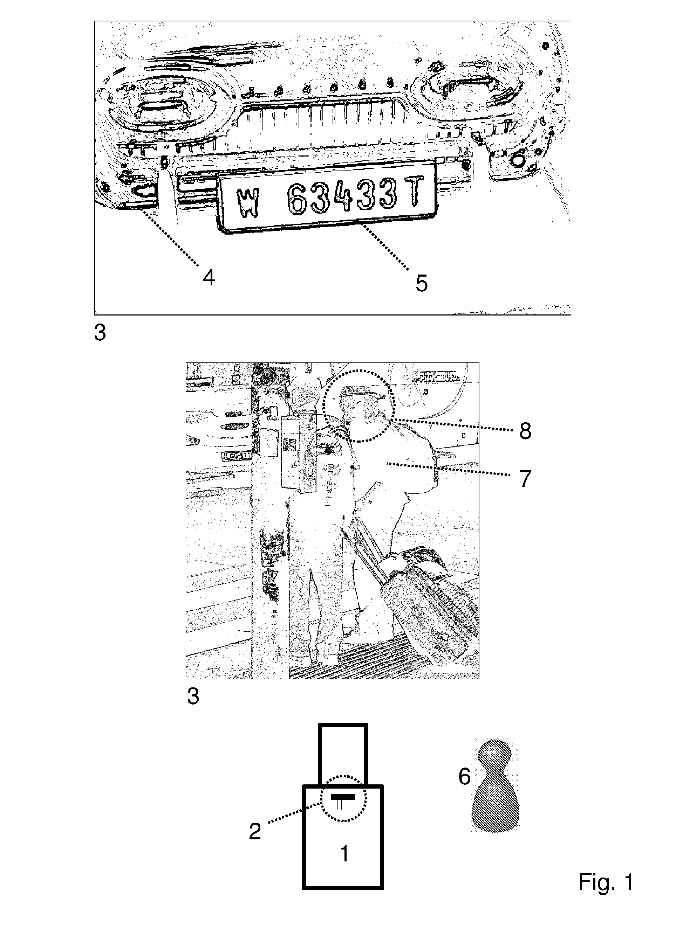

Figur 1 zeigt ein von einer Kamera 1 mittels Bildsensor 2 erfasstes Originalbild 3, von dem eine personenbezogene Information an einem Kfz 4 in Form des Kfz-Kennzeichens 5 eindeutig ablesbar ist. Systeme, deren Funktion auf der Erfassung und Verarbeitung solcher Bilder beruhen, dienen z.B. der Identitätsfeststellung bei Verkehrsübertretungen. Das Kfz-Kennzeichen ist aber in weiteren Anwendungen auch als eindeutiges Tracking-Merkmal geeignet, um z.B. an einer Kreuzung den Bewegungsablauf von Fahrzeugen zu ermitteln, z.B. PCT/AT2009/000432, oder um die Erfassung von Reisezeiten und Reiserouten anhand der Feststellung desselben Kfz-Kennzeichens bzw. anhand einer Signatur des Kfz-Kennzeichens an verschiedenen Messstandorten im Straßennetz zu bewerkstelligen.

Gerade bei Anwendungen, bei denen lediglich eine statistische Analyse z.B. von Gefahrensituationen an Unfallhäufungsstellen oder die zuverlässige Echtzeit-Verkehrsdatenerhebung für ein effizientes Verkehrsmanagement von Bedeutung sind, bietet das Kfz-Kennzeichen einerseits eine hervorragende Grundlage, um solche anonymisierten Informationen zu generieren, andererseits sind die dem heutigen Stand der Technik entsprechenden Geräte und Systeme kritisch in der Anwendung, da ein in Figur 1 symbolisch dargestellter Benutzer 6 des Kamerasystems, mit dem die Bilder aufgezeichnet wurden, einen direkten Zugang zu erfassten Bilddaten hat.

Figur 1 zeigt auch ein weiteres Beispielbild, in dem ein Benutzer 6 eine Person 7 an einem Schutzweg erkennen kann. Das Gesicht 8 der Person ist sichtbar, sodass eine Identifikation der Person anhand des vorliegenden Bildes nicht ausgeschlossen werden kann. Somit ist auch in diesem Beispiel eine Erfassung personenbezogener Daten gegeben.

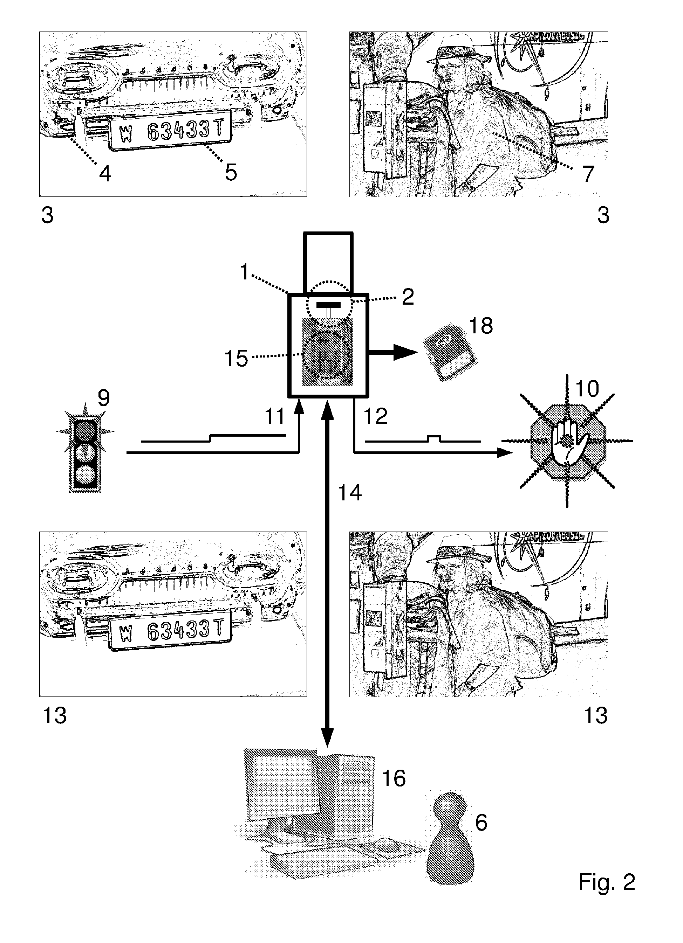

Figur 2 zeigt zu den Bildbeispielen aus Figur 1 zwei mögliche Szenarien für einen Anwendungsfall, bei dem mittels eines Kamerasystems Übertretungen bei Rotlicht 9 für Kraftfahrzeuge 4 bzw. für Passanten 7 automatisch erkannt werden sollen. Personenbezogene Daten sollen im Fallbeispiel nicht erhoben werden, jedoch soll der Fahrzeuglenker bzw. der Passant über eine geeignete Anzeige 10 direkt auf sein Fehlverhalten hingewiesen werden. Im Realisierungsbeispiel wird dazu das Signal "Rot" der Ampelsteuerung über einen Digitaleingang 11 an die Kamera geführt. Stellt die Kamera bei aufrechter Rot-Phase die unerlaubte Passage fest, so wird das Aktivierungssignal für die Anzeige über einen Digitalausgang 12 der Kamera 1 geschalten und ein Ergebnisbild 13 über eine Schnittstelle 14 ausgegeben.

Zur Konfiguration oder zur Bildübertragung verfügen Kameras 1 über eine oder mehrere physische Schnittstellen, z.B. USB, Firewire, Ethernet, WLAN oder Bluetooth. Eine physische digitale Schnittstelle kann funktional eine oder mehrere Software-Schnittstellen beinhalten, z.B. eine oder mehrere Socket-Verbindungen. Im weiteren Text wird der Begriff Schnittstelle synonym für eine Software-Schnittstelle einer nicht näher spezifizierten physischen Schnittstelle verwendet.

Solche Schnittstellen können ergänzend bzw. alternativ zu Digitaleingängen und Digitalausgängen in verschiedenen Kamerasystemen anwendungsspezifisch auch dazu verwendet werden, verschiedene Informationen (z.B. Signale, Tabellen, Datenbank-Einträge) von externen Funktionseinheiten (z.B. andere Sensoren, externe Steuerungen, Datenbank-Server) bei der Messdatenauswertung zu beziehen und bei der Auswertung mit zu berücksichtigen (z.B. Fahndungsliste mit Kfz-Kennzeichen gestohlener Fahrzeuge).

Aufgrund des Messprinzips arbeitet der Auswertealgorithmus auf Basis der Auswertung und Verfolgung des Kfz-Kennzeichens 5 bzw. durch eine Segmentierung von Personen 7 im Bild. Da die Messaufgabe lediglich darin besteht, dem Verkehrsteilnehmer sein eigenes Fehlverhalten zeitnahe anzuzeigen, jedoch darüber hinaus keinerlei personenbezogene Datenerhebung vorgenommen werden soll, stellt sich die nach heutigem Stand der Technik gegebene Erfassung und Verarbeitung personenbezogener Daten eher als Problem denn als technischer Vorteil dar. Es spielt im Fallbeispiel hinsichtlich des Datenschutzes eine untergeordnete Rolle, ob die Bildverarbeitung, die den Übertretungsfall erkennt, in einer Verarbeitungseinheit 15 der Kamera 1 selbst oder in einem externen Gerät 16 bewerkstelligt wird, da die Kamera 1 nicht vor dem direkten Zugriff auf Originalbilder 3 geschützt ist. Demnach verfügt ein Benutzer 6 über die praktische Möglichkeit, die Konfiguration der Kamera so zu wählen, dass mittels eines für den Benutzer 6 zugänglichen Speichers 18 oder über die Schnittstelle 14 Originalbilder 3 oder personenbezogene Messergebnisse, z.B. gelesene Kfz-Kennzeichen 5, eingesehen, archiviert und weiterverarbeitet werden können. Um dieses Problem abzufedern, kann den Bedürfnissen des Datenschutzes demnach im gegebenen Fallbeispiel vorwiegend nur durch restriktive Arbeitsanweisungen für Benutzer 6, jedoch nicht gänzlich mittels technischer Einschränkungen entsprochen werden.

Dem heutigen Stand der Technik entsprechende Kameras bieten verschiedene Einstellmöglichkeiten, die es dem geschulten, autorisierten Benutzer 6 jedenfalls ermöglichen, vom Bildsensor 2 erfasste Originalbilder 3 über eine Schnittstelle 14 oder über einen für ihn zugänglichen Speicher (z.B. SD-Karte, eingebaute Harddisk) 18 einzusehen.

Bei bekannter Spezifikation des Datenformates bieten herkömmliche Kameras üblicherweise keinerlei weiterreichenden Schutzmechanismen vor unbefugtem Zugriff und Manipulation, während z.B. Smart-Kameras teilweise erst nach passwortgeschützter Anmeldung am Gerät vollen Zugang zu umfassenden Visualisierungs- und Konfigurationswerkzeugen des Kamerasystems erlauben. Allen bisherigen Lösungen gemeinsam ist die Tatsache, dass dem autorisierten Benutzer 6 die technische Möglichkeit eingeräumt wird, vom Bildsensor 2 erfasste Originalbilder 3 mit personenbezogenen Daten direkt einzusehen. Zumindest in einer Phase der Systemeinstellung, Diagnose, gegebenenfalls auch im laufenden Betrieb, kann bei solchen Kamerasystemen nicht ausgeschlossen werden, dass personenbezogene Daten beobachtet, gespeichert und weiterverarbeitet werden.

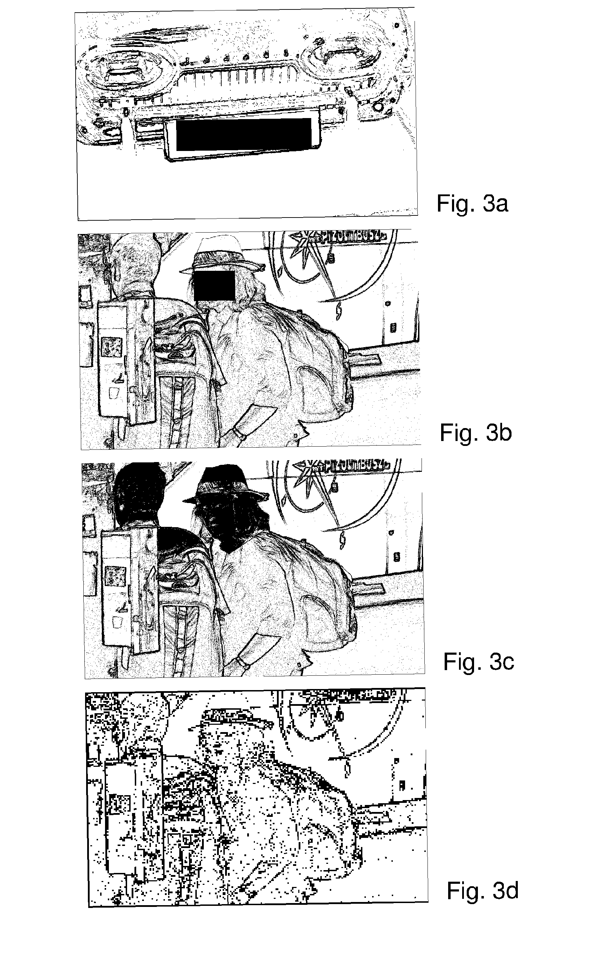

Figur 3 zeigt verschiedene Maßnahmen, um in erfassten Bildern personenbezogene Daten nach heutigem Stand der Technik zu anonymisieren.

In Figur 3a und 3b werden personenbezogene Daten aus dem Bild gelöscht. Eine zuverlässige Ausblendung ist nach dem heutigen Stand der Technik in vielen Fällen erst nach Speicherung der Daten im Rahmen einer manuellen Nachbearbeitung möglich, wenigstens eine begrenzte Benutzergruppe hat somit Zugang zu personenbezogenen Daten.

Figur 3c zeigt ein Bild, dessen Inhalt durch einen Bildverarbeitungsalgorithmus verändert wurde. Von der Algorithmik als kritisch bewertete Bildbereiche werden automatisch unkenntlich gemacht. Nach dem heutigen Stand der Technik existieren jedoch keine Auswerteverfahren, die in der Lage sind, in einer real vorliegenden komplexen Szene, wie sie in diesem Beispiel dargestellt ist, über Zeit und Ort stets punktgenau sämtliche personenbezogene Daten zuverlässig zu lokalisieren und auszublenden, und alle übrigen Details zu belassen.

Um der Aufzeichnung personenbezogener Daten vorzubeugen, werden deshalb gemäß Figur 3d oftmals Kameras mit einer hinreichend niedrigen Auflösung oder mit unscharf eingestellter Optik eingesetzt. Diese Maßnahmen haben zur Folge, dass Methoden der Bildverarbeitung nicht in der Lage sind, aus personenbezogenen Daten darauf bezogene anonymisierte Informationen abzuleiten, da diese bereits vor der Bilderfassung mittels Bildsensor 2 verloren gehen.

Um sicherzustellen, dass in jedem Betriebszustand ausschließlich unkenntlich gemachte Daten erzeugt werden, verfügt die erfindungsgegenständliche Kamera über durchgängige Schutzmechanismen, die für einen Benutzer 6 unter Vorgabe des Anwendungsfalles in jedem Betriebzustand eine direkte Beobachtung von personenbezogenen Daten im Bild unterbinden.

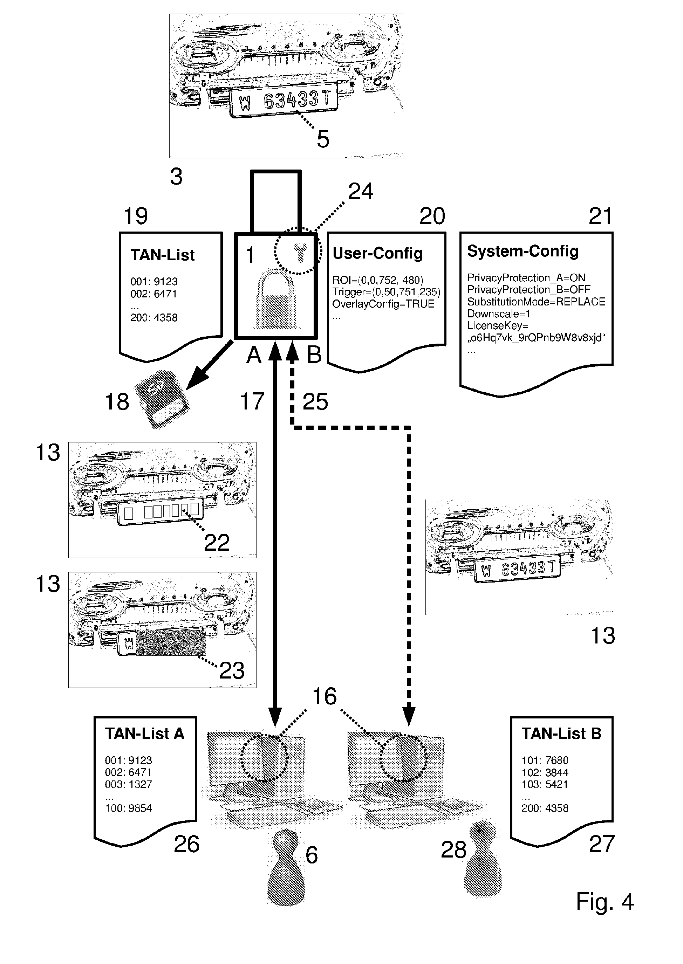

Figur 4 zeigt solche Schutzmechanismen an einem Realisierungsbeispiel. Im vorliegenden Fall wird ein System zur Lokalisierung und Auswertung von Kfz-Kennzeichen 5 so ausgelegt, dass über eine Schnittstelle A 17 keinerlei personenbezogene Daten ausgegeben werden. Die Kommunikation zwischen einem Benutzer 6 und der Kamera erfolgt ausschließlich über diese Schnittstelle A 17. Um die Berechtigung des Benutzers zu überprüfen, übermittelt die Kamera 1 eine Authentifizierungsanforderung, im Realisierungsbeispiel eine TAN-Code-Abfrage anhand einer in der Kamera hinterlegten TAN-Codeliste 19. Der befugte Benutzer erhält über die Schnittstelle A nur nach korrekter Angabe des TAN-Codes einen Zugriff auf alle für ihn relevanten Konfigurationsmöglichkeiten des Systems, ohne jedoch im Zuge seiner Tätigkeit direkten Zugriff auf vom Sensor erfasste Originalbilder 3 zu erhalten. Dazu ist in der Kamera zumindest eine Benutzerkonfiguration 20 hinterlegt, die vom Benutzer 6 verändert werden kann, sowie zumindest eine zweite Systemdefinition 21, die von keinem Benutzer verändert werden kann. Diese vom Hersteller fest vorgegebene Systemdefinition enthält insbesondere auch jene Parametereinstellungen, die die im Sinne der zugrundeliegenden Anwendung sichere Unkenntlichmachung der Bilddaten beschreibt.

Im gegenständlichen Beispiel wird die Kamera 1 so konfiguriert, dass über mindestens eine Schnittstelle A 17 im Ergebnisbild 13 alle gefundenen Symbole am Kfz-Kennzeichen 5 durch neutrale Platzhalter 22 ersetzt werden. Da bei der vorliegenden Anwendung eine Bildausgabe nur erfolgt, wenn ein Kfz-Kennzeichen tatsächlich detektiert wurde und nachdem übrige Bildinhalte z.B. durch den Einbau von einem optischen Tageslichtsperrfilter abgedunkelt werden können, wird im Fallbeispiel auf darüber hinausgehende Maßnahmen, wie z.B. der Auflösungsreduktion übriger Bildbereiche, verzichtet.

Bei gleichbleibendem Lösungsansatz kann anstelle der Anonymisierung auch eine Pseudonymisierung personenbezogener Daten vorgenommen werden. Dazu werden personenbezogene Daten nicht durch Auflösungsreduktion oder durch neutrale Platzhalter, sondern durch eine geeignete Verschlüsselung 23 von Bildinhalten für einen Benutzer 6 unkenntlich gemacht. Verfügt z.B. jede Kamera über einen individuellen Schlüssel 24, so können je installiertem Gerät nur genau zur Datenerhebung autorisierte Benutzer 28 verschlüsselte Bildbereiche dieser Kamera wieder rekonstruieren. So ausgelegte Systeme unterliegen zwar weiterhin den Regelungen des Datenschutzes, sie bieten im Vergleich zu heute marktüblichen Systemen aber eine durchgängige und damit höhere technische Sicherheit gegen die unautorisierte Nutzung von personenbezogenen Daten.

Alternativ zur beispielhaft angeführten lokalen Verschlüsselung von Inhalten im Bild selbst können erfindungsgemäß verschlüsselte Inhalte bei Bedarf auch als getrennte Datensätze abgelegt werden. Dies ist z.B. dann sinnvoll, wenn auflösungsreduzierte Übersichtsbilder ohne erkennbare personenbezogene Daten messbegleitend archiviert werden sollen und nur bestimmte Inhalte mit potentiell relevanten personenbezogenen Daten in voller Qualität, dafür aber pseudonymisiert gespeichert werden sollen.

Eine weitere erfindungsgemäße Realisierungsmöglichkeit besteht auch darin, eine Systemintegration über wenigstens zwei Schnittstellen A und B vorzunehmen, wobei z.B. die Bilder lediglich an Schnittstelle A 17, die zur Wartung und Konfiguration vorgesehen ist, anomymisiert werden, während über wenigstens eine weitere Schnittstelle B 25, die mit einem befugten Datenempfänger verbunden sind, nicht anonymisiertes Bildmaterial übermittelt wird. Um zu vermeiden, dass sich ein Benutzer 6 unerlaubt über eine für ihn nicht freigeschaltene Schnittstelle verbindet, können im Sinne des vorgeschlagenen Lösungsansatzes z.B. für unterschiedliche Schnittstellen unterschiedliche TAN-Codegruppen zugewiesen und abgefragt werden (z.B. Schnittstelle A: TAN-Codeliste 26 mit TAN-Codes 001 - 100 für einen nicht datenerhebungsbefugten Benutzer 6, Schnittstelle B: TAN-Codeliste 27 mit TAN-Codes 101-200 für einen datenerhebungsbefugten Benutzer 28) und diese nur der jeweils befugten Nutzergruppe bekannt gegeben werden.

Anstelle einer wiederholten manuellen Eingabe eines TAN-Codes durch einen Benutzer 6, 28 kann dieser in einer vorteilhaften Ausführung der Erfindung die TAN-Authentifizierung auch automatisieren, indem er die für seine Zutrittsberechtigung vorgesehene TAN-Codeliste 26, 27 auf seinem Arbeitsplatz 16 hinterlegt. Dazu muss natürlich sichergestellt werden, dass lediglich der jeweilige Benutzer selbst bzw. ausschließlich Benutzer einer dafür befugten Benutzergruppe Zugang zur so hinterlegten TAN-Codeliste haben.

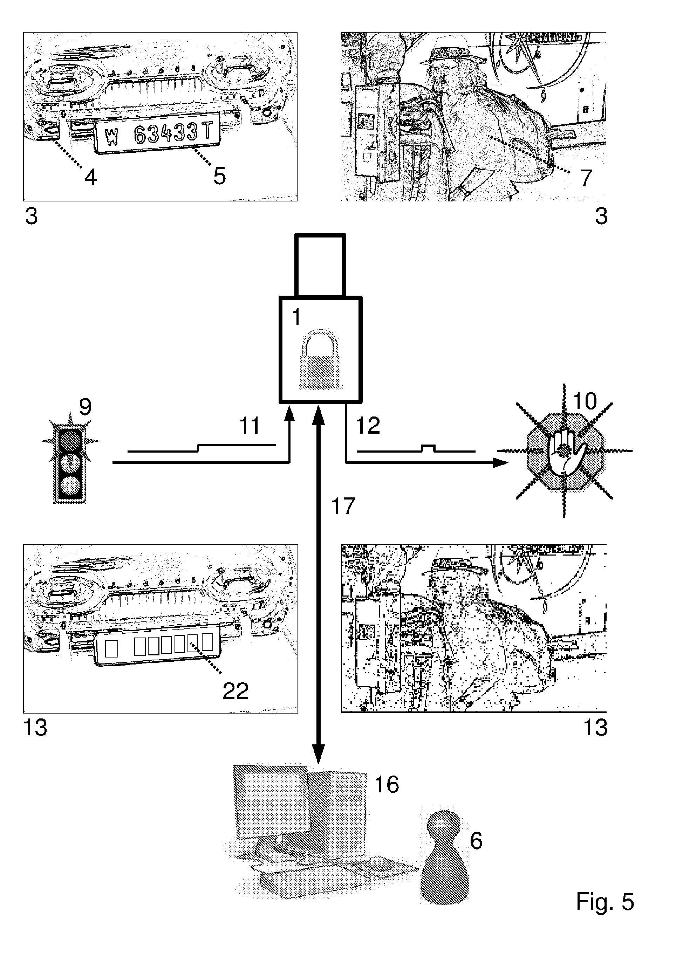

Figur 5 zeigt für die Anwendung in Figur 2 eine erfindungsgemäße Realisierung. Die Kamera 1 ist so konfiguriert, dass jeweils alle personenbezogenen Daten im Bild automatisch anonymisiert werden. Im Fall von Kfz-Kennzeichen 5 werden gefundene Symbole im Kennzeichen durch neutrale Platzhalter ersetzt 22. Duch die Anwendung von Unschärfeoperatoren oder durch eine szenenangepasste Reduktion der Auflösung werden sämtliche Bilder der Kamera so verändert, dass aus dem von der Kamera ausgegebenen Bildmaterial eine subjektive Ermittlung personenbezogener Daten nicht mehr möglich ist. Um z.B. auch die Sichtbarkeit nicht detektierter aber für einen menschlichen Beobachter erkennbare Kennzeichen im Bild zu unterdrücken, werden bei Bedarf mehrere Maßnahmen (z.B. Platzhalter für detektierte Symbole, Unschärfeoperator für übrige Bildbereiche) bei der Erzeugung des ausgegebenen Bildes kombiniert.

Durch diesen Lösungsansatz besteht innerhalb der Kamera die Möglichkeit, für die Messaufgabe signifikante, personenbezogene Bildinhalte aus dem unbeeinträchtigten Originalbild 3 zu ermitteln, um z.B. den zeitlichen Bewegungsablauf des Kfz auf Basis des Kfz-Kennzeichens detailliert zu erheben oder um Konturmerkmale von Personen im erfassten Bild mit höchstmöglicher Genauigkeit zu ermitteln. Anwendungsgemäß speichert die Kamera weder ausgewertete Originalbilder 3 ab, noch liefert sie über die Schnittstelle 17 personenbezogene Daten. Die Systemkonfiguration erlaubt es dem Benutzer aber weiterhin, eine standortbezogene Konfiguration an der Kamera vorzunehmen und anonymisierte Bilder in Echtzeit zu beobachten, um die Anlage bestmöglich zu justieren. Anonymisierte Ergebnisbilder 13 können in diesem Fall auch archiviert, weitergegeben und nachträglich begutachtet werden, um z.B. statistische Aussagen über standortspezifische Gefährdungspotentiale ableiten zu können.

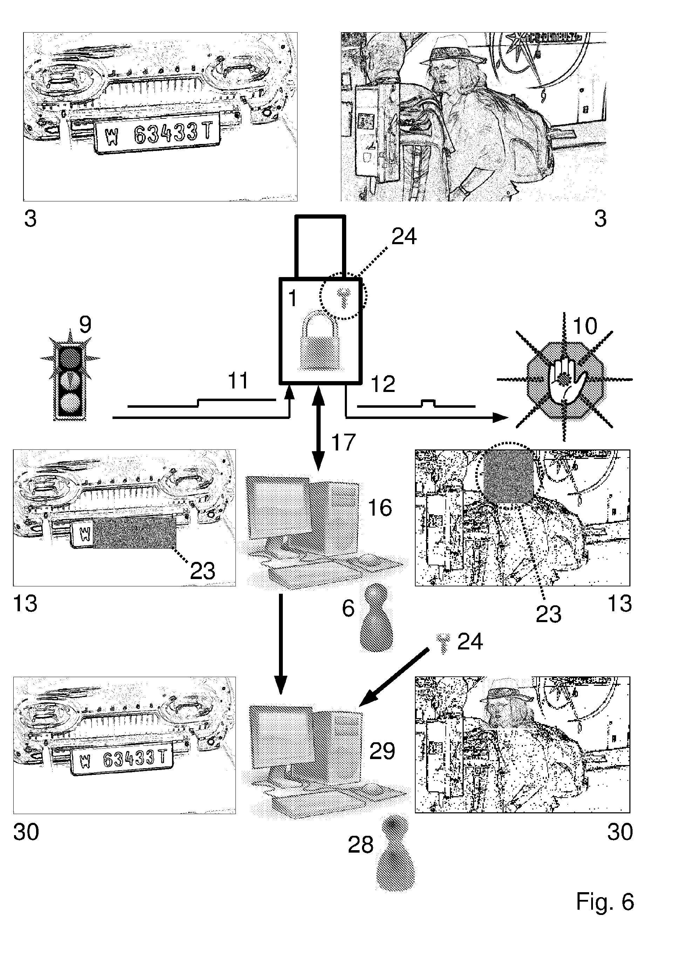

Figur 6 zeigt eine weitere vorteilhafte Realisierungsvariante der Erfindung. In diesem Beispiel liegt eine Anwendung vor, bei denen sehr wohl personenbezogene Daten erhoben werden. Diese sollen jedoch pseudonymisiert übertragen, und bei Bedarf ausschließlich an einem nachgelagerten Arbeitsplatz 29 für jene Benutzer 28 einsehbar sein, in deren Zuständigkeitsbereich die Erhebung dieser Daten liegt. Dazu werden personenbezogene Daten im Bild nicht durch neutrale Platzhalter ersetzt, sondern unter Einbeziehung eines in der Kamera hinterlegten Schlüssels 24 unkenntlich gemacht. Auf diese Weise wird vermieden, dass eine nicht mit der Datenerhebung betraute Benutzergruppe einen visuell interpretierbaren Eindruck zu personenbezogenen Daten hat. Diese Pseudonymisierung in der Kamera 1 ermöglicht es insbesondere auch, Systeme zu realisieren, bei denen die Beeinträchtigung der persönlichen Sphäre zufällig aufgenommener Menschen auf ein erforderliches Minimum reduziert wird. Ist ein solches Kamerasystem z.B. als sicherheitstechnische Einrichtung im Einsatz, kann es so ausgelegt werden, dass im alltäglichen Betrieb ausschließlich pseudonymisierte Bilder 23 erzeugt und zwischengespeichert werden. Um eine kriminelle Handlung nachvollziehen zu können, wird ausschließlich von einem zur Datenerhebung befugten Benutzer 28 an einem nachgelagerten Arbeitsplatz 29 selektiv genau jenes entschlüsselte Bildmaterial 30 analysiert, das im relevanten Zeitrahmen erfasst und aufgezeichnet wurde.

Auf diese Weise ergibt sich ein Instrumentarium, z.B. befugten Behörden auf richterlichen Beschluss die Möglichkeit einzuräumen, nach schwerwiegenden Delikten anhand pseudonymisiert vorliegender Daten von Kamerasystemen, selektiv über Ort und Zeit Identitäten und Tathergänge zu rekonstruieren. Dazu können erfindungsgemäße Kamerasysteme mit Vorliegen einer entsprechenden datenschutzrechtlichen Genehmigung vom Hersteller so konfiguriert werden, dass diese für den primären Benutzer weiterhin lediglich anonymisierte Messergebnisse liefern und pseudonymisierte Bilder prozessbegleitend für die ausschließliche Verwendung durch diese befugten Behörden bereitstellen.

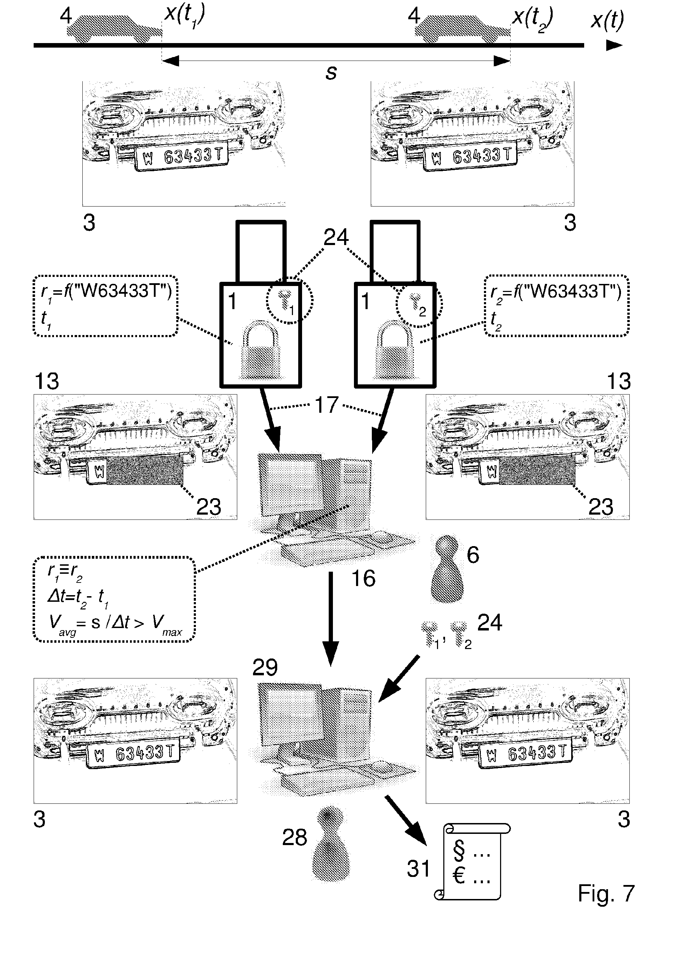

Eine weitere Anwendungsmöglichkeit der Erfindung zeigt Figur 7: ein Fahrzeug 4 fährt auf einer Straße, wobei der von der Zeit t abhängige Aufenthaltsort des Fahrzeuges mit x(t) angesetzt wird. Zu den Zeitpunkten t₁, t₂ wird es an zwei Messstellen detektiert, wobei aus dem Kfz-Kennzeichen 5 eine nicht rückrechenbare Signatur r z.B. über eine Streuwertfunktion r=f("W63433T") errechnet. Über die Schnittstellen 17 der Kameras 1 werden ausschließlich Ergebnisbilder 13 mit pseudonymisiertem Inhalt 23 ausgegeben. Durch die Feststellung der gleichen Signatur an unterschiedlichen Messstandorten kann die durchschnittliche Geschwindigkeit aus der bekannten Zeitdifferenz Δt= *t₁ - t₂* und der bekannten, für das Fahrzeug 4 minimalen Wegdifferenz s zwischen den Messtandorten ermittelt werden: *V_{avg}=s* / Δt. Nur wenn *V_{avg}* die höchste zulässige Geschwindigkeit Vₘₐₓ überschreitet, werden die pseudonymisierten Bilder samt zugehöriger Messergebnisse an einen nachgelagerten Arbeitsplatz 29 weitergeleitet. Das Bildmaterial wird entschlüsselt und von einem Benutzer 28 überprüft. Nach Validierung der Übertretung wird eine Ahndung der Übertretung 31 vorgenommen. Auf diese Weise lassen sich straßenseitige Sensorsysteme aufbauen, bei denen ein Benutzer 6, der nicht sowohl über die Schlüssel 24 als auch die zugehörigen Entschlüsselungsverfahren verfügt, in seiner eigenen Sphäre keinerlei personenbezogene Daten erheben kann.

Durch die Möglichkeit, z.B. anhand der anonym ermittelten Reisezeiten ein Verkehrsmanagement-System zu realisieren und Daten erhebungsbefugten Benutzern 28 zur Verfügung zu stellen, ohne Gefahr zu laufen, selbst einer missbräuchlichen Nutzung von Daten bezichtigt zu werden, ergibt sich auch eine verbesserte Gesamteffizienz. Es entfällt die Notwendigkeit, aufgrund unterschiedlicher datenschutzrechtlicher Gegebenheiten ähnliche Messaufgaben als getrennte Infrastruktur aufzubauen, womit gegenüber bestehenden, parallel ausgeführten Systemen, ein deutlicher wirtschaftlicher und ökologischer Vorteil erzielt wird.

## Patentansprüche

1. Verfahren zur Unkenntlichmachung personenbezogener Daten einer Kamera (1), **dadurch gekennzeichnet, dass** eine Verarbeitungseinheit (15) personenbezogene Daten in vom Bildsensor (2) der Kamera (1) erfassten Originalbildern (3) in jeder durch einen Benutzer (6) einstellbaren Konfiguration (20) innerhalb der Kamera unkenntlich macht, und nur auf diese Weise veränderte Bilder oder aus diesen abgeleitete Bilder als Ergebnisbilder (13) in einem für den Benutzer zugänglichen Speicher (18) ablegt oder über eine für den Benutzer zugängliche Schnittstelle (17) ausgibt.

2. Verfahren nach Anspruch 1, **dadurch gekennzeichnet, dass** die Kamera (1) Bilder, auf denen personenbezogene Daten subjektiv erkennbar sind, in jeder durch einen Benutzer (6) einstellbaren Konfiguration (20) in keinem für einen Benutzer (6) zugänglichen Speicher (18) ablegt und über keine für den Benutzer (6) zugängliche Schnittstelle (17) ausgibt.

3. Verfahren nach Anspruch 1, **dadurch gekennzeichnet, dass** die Kamera auch Ergebnisbilder (13) zumindest in einem bestimmten Speicher (18) ablegt oder über zumindest eine bestimmte Schnittstelle (17) ausgibt, auf denen personenbezogene Daten nicht unkenntlich gemacht werden.

4. Verfahren nach einem der Ansprüche 1-3, **dadurch gekennzeichnet, dass** die Kamera (1) personenbezogene Daten in den vom Bildsensor (2) erfassten Originalbildern (3) auswertet.

5. Verfahren nach Anspruch 4, **dadurch gekennzeichnet, dass** die Auswertung der Originalbilder (3) unter Berücksichtigung von Informationen, welche von einer externen Informationsquelle stammen, vorgenommen wird.

6. Verfahren nach Anspruch 4 oder 5, **dadurch gekennzeichnet, dass** die Kamera aufgrund der Auswertung Messergebnisse auf einem für den Benutzer (6) zugänglichen Speicher (18) ablegt oder über eine für den Benutzer zugängliche Schnittstelle (17) ausgibt.

7. Verfahren nach Anspruch 6, **dadurch gekennzeichnet, dass** die Kamera ausschließlich anonymisierte Messergebnisse auf einem für den Benutzer (6) zugänglichen Speicher (18) ablegt oder über eine für den Benutzer zugängliche Schnittstelle ausgibt.

8. Verfahren nach einem der Ansprüche 1-7, **dadurch gekennzeichnet, dass** sich ein Benutzer (6, 28) im Rahmen der Anmeldung an einer Schnittstelle (17, 25) durch die korrekte Beantwortung einer TAN-Code Abfrage authentifizieren muss.

9. Verfahren nach einem der Ansprüche 1 bis 8, **dadurch gekennzeichnet, dass** die Kamera über mindestens zwei Schnittstellen (17, 25) verfügt.

10. Verfahren nach Anspruch 9, **dadurch gekennzeichnet, dass** die von unterschiedlichen Benutzern (6, 28) verwendeten Schnittstellen (17, 25) einer unterschiedlichen Authentifizierung unterliegen.

11. Kamera (1) mit zumindest einer Verarbeitungseinheit (15) und zumindest einer Schnittstelle (17, 25), **dadurch gekennzeichnet, dass** sie dazu eingerichtet ist, ein Verfahren nach einem der Ansprüche 1 bis 10 durchzuführen.

12. Kamera (1) nach Anspruch 11, **dadurch gekennzeichnet, dass** zwei Schnittstellen (17, 25) vorgesehen sind.
